## Europäisches Patentamt
## European Patent Office
## Office européen des brevets

(19)

(11) Publication number: **0 054 991**
A1

(12) **EUROPEAN PATENT APPLICATION**

(21) Application number: **81201310.0**

(22) Date of filing: **25.11.81**

(51) Int. Cl.³: **F 02 B 43/08, F 02 G 3/02**

(30) Priority: **19.12.80 NL 8006910**

(43) Date of publication of application: **30.06.82 Bulletin 82/26**

(84) Designated Contracting States: **AT BE CH DE FR GB IT LI LU NL SE**

(71) Applicant: **J.W.G. Industrie- en Handelsonderneming B.V., No. 7, Stationsplein, NL-7391 EM Twello (NL)**

(72) Inventor: **Geurtsen, Theodorus Johannes Antonius, No. 29, Oude Rijksstraatweg, NL-7391 MB Twello (NL)**

(74) Representative: **'t Jong, Bastiaan Jacobus et al, OCTROOIBUREAU ARNOLD & SIEDSMA Sweelinckplein 1, NL-2517 GK 's-Gravenhage (NL)**

(54) **Stationary aggregate comprising a combustion engine and a device driven thereby.**

(57) A stationary aggregate (1) comprising a frame (2), a combustion engine (3) mounted on said frame and provided with a fuel inlet (14) and a combustion air inlet comprising a gas generator (7, 50) having a gassifying vessel (8, 51), provided with an air inlet (22, 70) and a gas outlet duct (9, 76) connected with the fuel inlet, and a gas purifying device (10, 11, 77) included in the gas outlet duct, and by a starting ventilator (13) connected with the gas outlet duct parallel to the fuel inlet. Preferably the aggregate comprises fuel drying means (117, 128, 155).

0054991

## STATIONARY AGGREGATE COMPRISING A COMBUSTION ENGINE AND A DEVICE DRIVEN THEREBY.

The invention relates to a stationary aggregate comprising a frame, a combustion engine mounted on said frame and provided with a fuel inlet and a combustion air inlet and comprising a device driven by the combustion engine.

Such an aggregate is known from Dutch Patent Application 7807474. In this case the driven device is formed by an electric generator. Such an aggregate is frequently used in remote areas where no electric mains are available. Particularly for developing countries these aggregates can be a great help. The electricity thus produced is used, for example, for electric irrigation pumps or, instead, the aggregate itself may comprise a pump driven by the combustion engine. A disadvantage of the use of such an aggregate in remote regions is that a regular supply of petrol or Diesel oil has to be ensured. This often means a transport of the fuel over large distances, which may involve high costs and, in addition, a great risk of disturbance of the supply.

The invention has for its object to obviate this disadvantage.

According to the invention this is achieved by means of an aggregate of the kind set forth in the preamble comprising a gas generator having a gassifying vessel provided with an air inlet and a gas outlet duct connected with the fuel inlet and having a gas purifying device included in the gas outlet duct and a start ventilator connected parallel to the fuel inlet with the gas outlet duct. A satisfactory operation of the aggregate is thus no longer dependent on a risky supply over great distances of petrol or Diesel oil, since there may be used combustible material directly at hand, for example, wood or other organic refuse such as leaves, dried manure and, as the case may be, charcoal, lignite or peat.

The invention provides an aggregate which is not limited to an effective use in circumstances involving problems of fuel supply. In industrialized countries as well the aggregate according to the invention may be effectively employed, for example, in wood saw mills or the like, where much wood waste material is formed, so that it is useful to employ an aggregate according to the invention in order to produce electricity from the waste wood by which machinery of the mill can be driven. Not only in wood sawing mills but also in other wood processing industries waste wood is produced, which can be suitably used in the aggregate according to the invention. At other places too much combustible waste material is released, for example, during the maintenance of woodland and in horticulture, where dried leaves might form suitable fuel. It is possible to drive several combustion engines by a single gas generator, for example, in dependence on the need for electricity. Moreover, two gas generators may be used for a single combustion engine, in which case the combustion engine can continuously operate since the gas generators are alternately used and during the period of operation of one gas generator the other generator can be cleaned and filled.

If, in accordance with the invention, the aggregate comprises fuel drying means, it is possible to use fuels normally having an excessively high humidity content.

In a preferred embodiment the fuel drying means comprise a circulation conduit having both its ends connected with the gassifying vessel and including a ventilator and a condenser. This permits of directly introducing excessively humid fuel into the gassifying vessel on a lower layer of dry material, which serves to start the gas generator. Owing to the heat in the gassifying vessel the moisture of the wet fuel evaporates. The vapour is conveyed by the ventilator through the circulation conduit to the condenser, where the vapour condenses. The remaining dry air is conducted back in a closed circuit to the gassifying vessel. Consequently, before the fuel is consumed it is thus dried to a suitable moisture content.

In another embodiment of the invention the fuel drying means utilize the residual heat of the gassifier or the engine, as defined in some of the subclaims.

When the air inlet is arranged in the gassifying vessel at a distance from the lower end and the gassifying vessel has a double-walled structure from near the air inlet to the lower end, the space between the two walls communicating at the lower end with the interior of the gassifying vessel and at the top end with the gas outlet duct, a very satisfactory purification of the gases is achieved, since then the gases are first conducted across a quantity of fuel located beneath the hearth, the gas thus being cooled and a large portion of the ashes and tar being left in this fuel. Bij subsequently conducting the gases through the gap between the two wall, they are reheated so that the gas is further proportionally dried and the residuel contaminating particles can be separated out in a cyclone without any problem. The gas thus processed is completely free of impurities and will, therefore, not foul the engine. This is particularly important in a stationary aggregate, because then the period between two inspection times can be optimally long, the time during which the aggregate in out of operation being thus minimized.

Further advantages and features of the device embodying the invention improving its usefulness will become apparent from the following description with reference to the drawing showing embodiments of the invention.

Fig. 1 is a perspective view of an aggregate embodying the invention, some parts being partly broken away.

Fig. 2 is a diagram of the arrangement of the various parts of the aggregate of Fig. 1.

Fig. 3 is a perspective view of a preferred embodiment of a gassifying vessel, some parts being partly broken away.

Fig. 4 is a perspective view of a cooler and a cyclone of an aggregate embodying the invention, some parts being partly broken away.

Fig. 5 schematically shows the mode of coupling of a control-valve in the gas inlet and a control-valve in the air inlet.

Fig. 6 is an elevational view corresponding to Fig. 5 of a further embodiment.

Fig. 7 is a perspective view of a further embodiment.

Fig. 8 shows the starting ventilator used in the aggregate embodying the invention.

Fig. 9 is a perspective view of a fuel container for the aggregate embodying the invention, some parts being partly broken away.

Fig. 10 is a partly sectioned side elevation of a gassifying vessel emboying the invention.

Fig. 11 schematically shows a gassifying vessel provided with a fuel supply device.

Fig. 12 is a schematic, pespective view of a gas generator in a different embodiment, some parts being partly broken away.

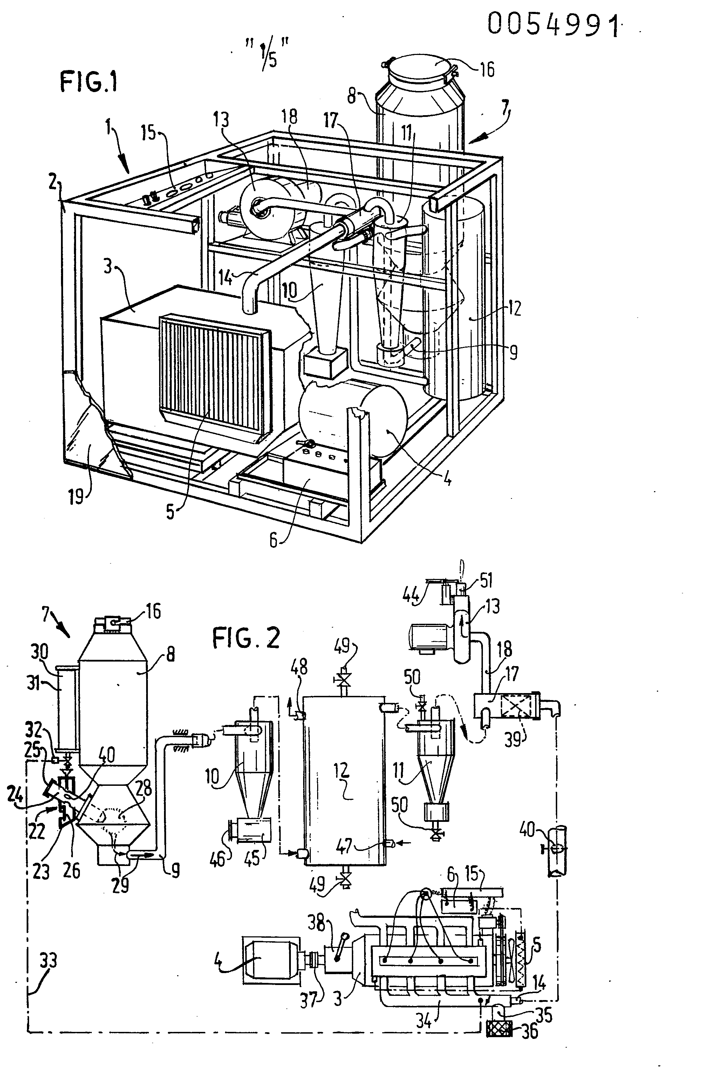

The aggregate 1 comprises a frame 2, in which is mounted a combustion engine 3 shown schematically in Fig. 1. The combustion engine 3 is coupled with a driven device 4, which may be an electric generator or a water pump. In the frame 2 is furthermore mounted an engine cooler 5. The fuel inlet 14 of the combustion engine 3 communicates with a gas outlet duct 9 of a gas generator 7. The gas generator 7 comprises a gassifying vessel 8 provided at the top with a filling cover 16 and on the lower side with the above-mentioned gas outlet duct 9. In the embodiment shown the gassifying vessel 8 is mounted on the outer side of the frame of the aggregate 1. The gas duct 9 included a purifying device comprising a first cyclone 10 and a second cyclone 11. A gas cooler 12 is arranged between the first cyclone 10 and the second cyclone 11. The cyclones 10, 11 and the gas cooler 12 are fixedly mounted in the frame 2. The outlet of the second cyclone 11 is in direct communication with a manifold 17, which is connected on the one hand with the gas inlet of the engine 3 and on the other hand with the starting ventilator 13. This connection is established by the duct 18. The aggregate 1 furthermore comprises the members for starting the engine 3 and for checking the operation of the engine 3 and, as the case may be, the electric generator 4. The frame is provided on the outer side with plates 19 having, at suitable spots, grated openings for passing cooling air and the like.

The diagram of Fig. 2 shows how the various parts of the aggregate embodying the invention are coupled with one another. The air inlet 22 of the gassifying vessel 8 comprises an inlet tube 24 provided with a cover 25 and partly surrounded by an air casing 23. In the air casing 23 is formed an inlet aperture having a check valve 26. Through orifices 40 in the inlet tube 24 the latter communicates with the interior of the air casing 23. Through the orifices in the air casing 23 and the orifices 40 in the inlet tube 24 air can flow into the gassifying vessel 8 and especially the combusion zone 28 thereof. The gassifying vessel 8 is also provided with a water supply device 30 comprising a water reservoir 31 and a controlvalve 32 introducing water in metered portions into the inlet tube 24. The controlvalve 32 is coupled through a vacuum duct 33 with the inlet manifold 34 of the combustion engine 3 and it thus regulates the supplied amount of water in dependence on the subatmospheric pressure in the inlet manifold 34. The gassifying vessel 8 is provided with a grate 27 supporting the fuel. The mode of operation of the gas generator will be explained hereinafter. The ash and dirt particles carried by the gas stream 29 from the gassifying vessel 8 are removed from the gas in the purifying device comprising the first cyclone 10 and the second cyclone 11. The coarser dirt particles accumulate below in the cyclone 10 in the ash casing 45 provided with a cover 46. The cover 46 can be removed from the casing 45 in order to remove the collected dirt and ashes. The cooler 12 comprises, apart from the connections for the gas circuit, a coolant inlet 47 and a coolant outlet 48. Moreover, in accordance with the invention, flushing ducts 49 are provided on the cooler 12 for communication with the gas circuit so that dirt deposited in the cooler can be flushed away. The second cyclone 11 is also provided with flushing ducts 50. The manifold 17 comprises furthermore a last purifying element 39 formed by a filter of wood wool or the like. At its outlet 51 the starting ventilator 13 is provided with a flap 44, the function of which will be described hereinafter. With the inlet manifold 34 of the combustion engine 3 communicates a gas inlet 14 and an air inlet 35 provided with an air filter 36. The combustion engine 3 is coupled with the driven device 4 through a driving gear 38 and a clutch 37.

The aggregate 1 operates as follows. Through the filling opening normally closed by the cover 16 fuel such as wood, charcoal or the like is introduced into the gassifying vessel 8. The fuel will be supported by the grate 27. Then the flap 44 of the outlet 51 of the starting ventilator 13 is opened and the flap 40 in the fuel inlet conduit is closed. By switching on the starting ventilator 13 air is sucked through the air inlet 22 across the gassifying vessel 8, the cyclone 10, the cooler 12 and the cyclone 11 towards the starting ventilator 13. By removing the cover 25 from the inlet sleeve 24 a piece of burning paper, a fuse or the like can be passed into the vessel 8 so that the fuel in the vessel 8 is ignited. Then the cover 25 can again be deposited on the inlet sleeve 24, the air being further drawn in through the non-return valve 26 and the orifices 40 in the inlet tube 24. The starting ventilator 13 is left operating until an adequate amount of combustible gas is fed to the outlet 51 of the starting ventilator 13. This is simply checked by lighting the gas. After some experience the amount and the quality of the gas can be judged from the shape and the colour of the flame.

The resultant gas mainly contains carbon monoxide. The water contained in the fuel or, if the fuel is very dry, the water supplied by the water feeding device 30, reacts with the carbon monoxide and thus produces hydrogen.

When it is ascertained in the manner described above that the combustion in the vessel 8 is satisfying, the flap 44 of the starting ventilator 13 is closed, the starting ventilator 13 is switched off and the flap 40 in the fuel inlet duct of the engine 3 is opened. The engine 3 can then be started in a conventional manner by means of a starting motor. When the combustion engine 3 is running it performs itself the suction required for the gas formation. The gas production in the gas generator 7 very rapidly matches the need of the combustion engine 3 because the air fed through the air inlet 22 to the gassifying vessel 8 is proportional to said need of the engine 3. When the engine 3 is switched off, no gas is any longer drawn in and the check flap 26 closed. Thus no air will get any longer into the combustion zone 28 of the vessel 8 so that the fire will soon extinguish. According to the invention the amount of water to be supplied by the water feeding device 30 is controlled in dependence on the vacuum in the inlet manifold 34 of the combustion engine 3. When it is once determined for a given fuel how much water has to be fed under given load conditions of the engine 3, the required amount of water is proportional to the engine torque and hence to the inlet manifold pressure.

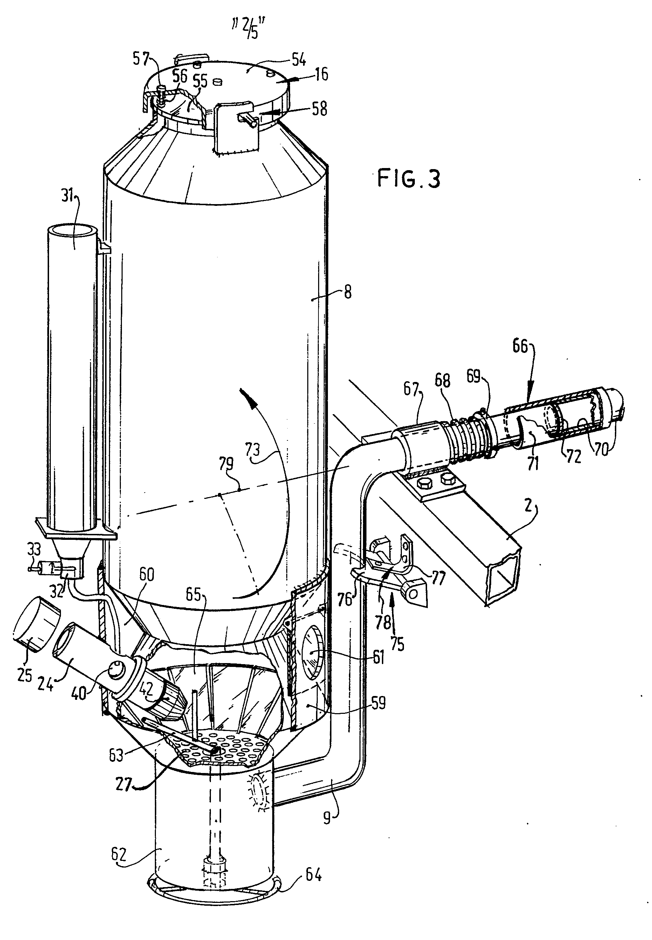

Fig.3 illustrates the structure of the cover 16 of the gassifying vessel 8. The cover 16 comprises a flap plate 55, which is connected by means of bolts 57 and springs 56 with the hood 54 so that this flap plate 55 is urged away from the hood 54. The bolts 57 are arranged so that, when the cover 16 is fixed to the vessel 8 with the aid of the bayonet catch 58, the flap plate 55 is resiliently pressed onto the filling opening of the vessel 8. If combustible gas should accumulate in the vessel 8 and should be ignited, when the fuel is practically consumed and the fire does not extinguish, an explosion might occur. Owing to the structure of the cover 16 the resultant pressure can be safely guided away between the flap plate 25 and the filling opening.

The gassifying vessel 8 of Fig.3 comprises an air preheating chamber 60 formed by a cylindrical outer wall 59 and the vessel. On the side opposite the air inlet tube 24 the wall 59 has a check valve 61 having the same function as the check valve 26 of the device of Fig.2. Since the air drawn in through the orifices 40 in the inlet tube 24 flows past the vessel, this air is preheated. This results in higher efficiency of the vessel because the combustion temperature in the combustion hearth increases proportionally. Fig.3 also shows that the conical lower end of the vessel 8 is provided with a refractory coating 65. In a preferred embodiment the gassifying vessel 8 comprises furthermore a slag remover 63, which can be actuated from the outer side of the vessel, in this case by means of a handwheel 64 and which can remove cinters accumulating in front of the inlet tube 24. According to the invention the air inlet tube 24 comprises an exchangeable nozzle head of refractory material. This material may be corund, fire brick corten steel or the like. Below the grate 27 the gassifying vessel 8 is provided with a gas chamber 62, with which communicates the gas outlet duct 9. In the gas chamber 62 ash particles and the like can accumulate.

According to a further aspect of the invention the gassifying vessel 8 is connected with the frame so as to be tiltable about a horizontal axis. In a preferred embodiment this horizontal axis is determined by the gas outlet duct 9. This is achieved by means of the bearing structure 66, which enables the part of the gas outlet duct 9 connected with the gassifying vessel 8 to turn with respect to a fixed part 70 of the gas outlet duct 9. The bearing structure 66 comprises a bearing support 67 secured to the frame 2, a compression spring 68 engaging the face of the bearing suport 67 remote from the vessel 8 and a clamping ring 69 connected with the gas outlet duct 9, which is engaged by the other end of the compression spring 68. Consequently the spring 68 exerts pressure on the vessel 8 in the direction towards the stationary part 70 of the gas outlet duct 9. The stationary part 70 of the gas outlet duct 9 is provided with a sleeve intimately surrounding said stationary part 70 and the movable part of the gas outlet duct 9, said sleeve being fixed to one of the two parts. Between the stationary part 70 and the movable part of the gas outlet duct 9 is arranged a sealing ring 72, for example, of brass or copper. Owing to the load of the spring 68 the two parts of the gas outlet duct 9 are firmly urged against the sealing ring 72 so that a gas-tight joint is formed. The gassifying vessel 8 can be locked in the upright position be means of the locking device 75. The locking device 75 comprises a locking plate 76 engaging the gas duct part 9 connected with the vessel and being biased by a leaf spring 77 in the direction in which the locking plate 76 is held in engagement. By moving upwards the locking plate 76 in the direction of the arrow 78 the locking is released and the vessel 8 can be tilted in the direction of the arrow 73 or in opposite direction about the horizontal axis 79 in order to remove the contents from the vessel via the filling opening.

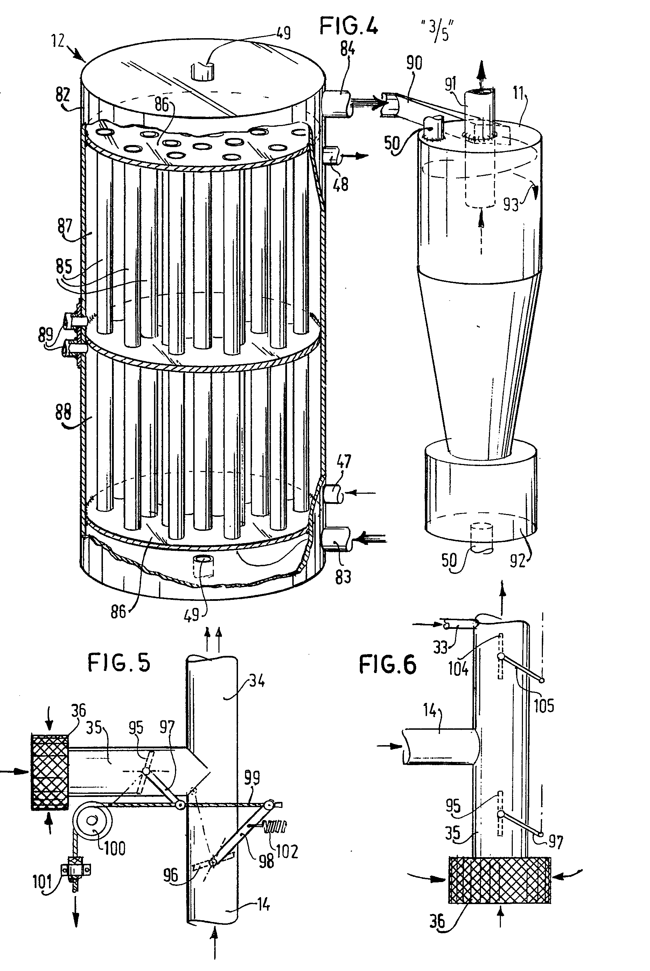

Fig.4 shows a possible embodiment of the cooler 12. The cooler 12 comprises a cylindrical jacket 82 provided at the underside with a gas inlet 83 and at the top side with a gas outlet 84. The cooler 12 is subdivided in a vertical sense by three plates 86 into four compartments. The upper and lower spaces constitute the gas inlet space and the gas outlet space respectively, whereas the two middle spaces form a first cooling space 88 and a second cooling space 87 respectively. Between the upper and lower plates 86 are arranged a plurality of tubes 85, through which the gas can flow from the inlet space towards the outlet space. The first and second cooling spaces are provided with intermediate connections 89, which can be caused to communicate with one another so that the two cooling spaces are traversed by a coolant, which is fed by the coolant inlet 47 and conducted away through the cooland outlet 48. As an alternative, the first cooling space 88 may be included in the cooling circuit of the combustion engine 3 and for the second cooling space 87 a cooland of lower temperature may be used, since it is necessary for the gas to have a temperature of about 30° at the most, when it reaches the combustion engine 3. At a higher temperature the degree of filling of the combustion engine 3 is not sufficient so that it can no longer product sufficient power. As stated above, the cooler 12 comprises flushing connections 49 for flushing the spaces traversed by the gas. In the cooler 12 may be deposited tar products condensing out of the hot gas. The gas outlet 84 of the cooler 12 communicates with the gas inlet 90 of the second cyclone 11. The gas inlet 90 is, both in a radial and an axial sense, at an angle to the cyclone 11 so that the incoming gas flow moves uniformly in spirals as indicated by the arrow 93 along the inner wall of the cyclone 11. The particles separated in known manner by centrifugal force get into the collecting space 92. They can be removed from the collecting space 92 through an opening (not shown) that can be closed or by flushing the cyclone 11 out of the collecting space 92. For flushing the cyclone 11 the latter has, as stated above, flushing connections 50.

The combustion engine 3 draws in gas as well as combustion air. In order to obtain the desired ratio between combustion air and gas in the final mixture to be fed to the engine 3, the fuel inlet 14 of the engine 3 includes a gas control-valve 96, the combustion air inlet 35, an air control-valve 95, said valves 95, 96 being interconnected through a transmission maintaining an adjustable opening ratio. In the embodiment shown in Fig.5 the transmission is formed by a cable 99, with which are connected control-arms 97,98 of the valves 95 and 96 respectively. The arms 97 and 98 have different lengths so that at a given axial movement of the cable 99 different opening angles of the control-valves 95, 96 are obtained. The combustion value of the gas supplied by the gas generator frequently depends on the kind of fuel used. This means that in the case of a different fuel the mixing ratio between gas and combustion air often has to be changed. In the embodiment of Fig. 5 this can be achieved by exchanging the control-arms 97, 98 when going over to a different fuel. As an alternative, the cable 99 may be connectable at different places on the control-arms 97, 98. The structure of Fig. 5 furthermore comprises a spring 102, which biases the control-valves 95, 96 in the closing sense.

Fig. 6 illustrates a different arrangement of the control-valves. In this embodiment the air inlet 35 also includes an air control-valve 95 connected with a control-arm 97. The second control-valve 104, however, is directly included in the duct connected with the manifold 34 of the engine 3. This mixing valve 104 is coupled with a control-arm 105. The control-arms 97 and 105 may be coupled in a manner corresponding with that of Fig. 5. Fig. 6 also shows the vacuum duct 33 for actuating the water feeding device.

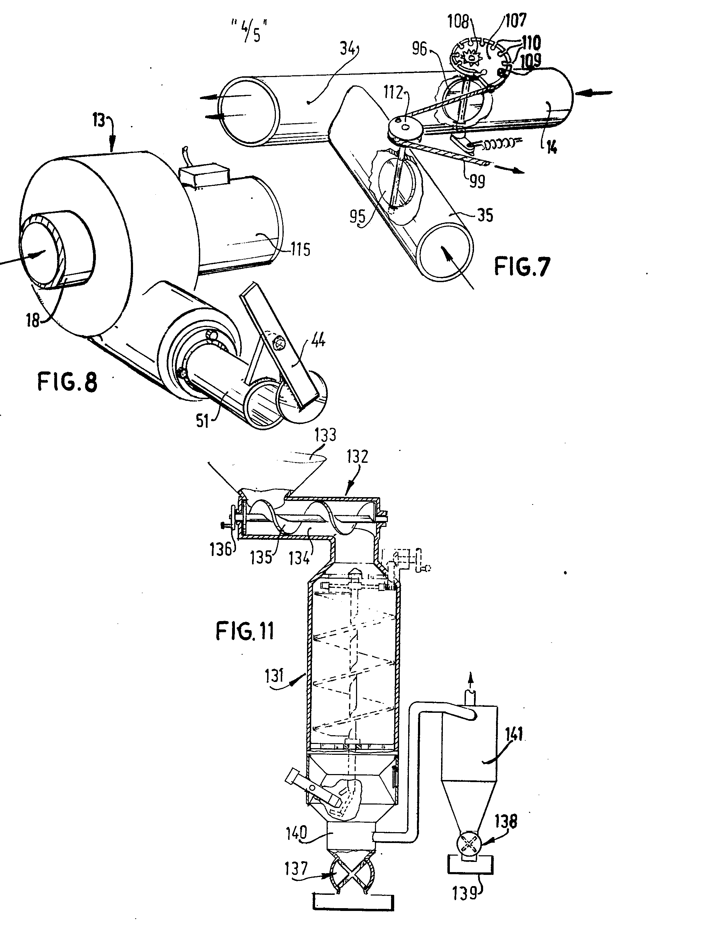

Fig. 7 shows an embodiment of the transmission between the control-valves 95, 96, which permits a simple adjustability of the transmission ratio. With the air control-valve 95 is connected an actuating wheel 111, which is engaged by the cable 99. Slip on the wheel 111 of the cable 99 is prevented by means of a fastening member 112. The gas control-valve 96 is coupled by means of a star-shaped coupling 108 with a spiral wheel 107. The periphery of the spiral wheel 107 has a number of recesses 110, in which an engaging member 109 can engage the end of the cable 99. Owing to the spiral shape of the wheel 107 the orifices 110 are located at different radial distances from the control-valve 96. The transmission ratio betweeen the control-valve 95 and 96 is determined by the ratio between the diameter of the wheel 111 and the radial distance of the orifice 110 concerned, which is engaged by the engaging member 109 of the cable 99. By means of the star-shaped coupling 108 the spiral wheel 107 can be placed on the shaft of the control-valve 96 in a position such that the desired orifice 110 is located on the side where the cable 99 is located.

Instead of mechanically coupling the two control-valves, they may be actuated, for example, by electric members governed by a control-device. The control-device can adjust the transmission ratio between the valves, for example, in dependence on the content of combustible gas in the gas supplied by the gas generator. For this purpose a detector is arranged at an appropriate place in the gas outlet duct 9.

Fig. 8 shows the starting ventilator 13 of the aggregate embodying the invention. The ventilator 13 comprises an electric motor 115, which preferably operates on the same voltage as the accumulator 6 of the combustion engine 3. The outlet 51 of the starting ventilator 13 is provided with the flap 44, the function of which is described in the foregoing.

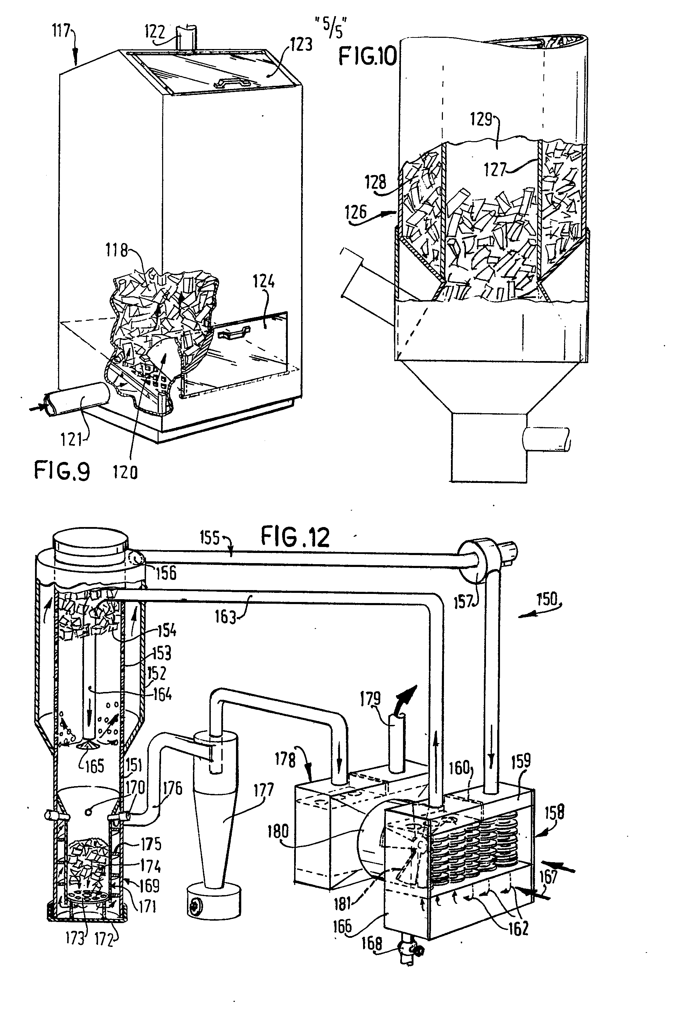

The fuel container 117 of Fig. 9 comprises a drying chamber into which fuel 118 is introduced through a filling flap 123. The fuel container 117 has a grate 120 in the lower side, which supports the fuel 118. The fuel container 117 has furthermore an inlet 121 and an outlet 122. The inlet 122 is connected with the outlet of the combustion engine 3. The exhaust gases of the combustion engine 3 have a high temperature and by passing these gases through the fuel container 117, the fuel 118 contained therein is dried. For a statisfactory operation of the gas generator the moisture content of the fuel should not exceed about 10%. The dried fuel can be taken out of the container 117 through the outlet flap 124. Since the blow-out noise is absorbed in the fuel 118, it is not necessary to arrange a separate sound absorber in the exhaust pipe of the engine 3. In a simpler form the fuel container 117 may be fully open on the top side.

An alternative possibility of previously drying the fuel is shown in Fig. 10. The gassifying vessel 126 has an additional, cylindrical wall 127, so that two spaces are formed i.e., a gassifying space 129 and a drying space 128. The gassifying space 129 is closed in known manner by means of a cover. The drying space 128 communicates on the top side with the open air so that the resultant water vapour can escape from the drying space 128 and the fuel therein is dried.

The foregoing embodiment of the aggregate 1 comprises a gas generator 7 having a gassifying vessel 8, which can accommodate a given quantity of fuel and which has to be refilled when this amount of fuel is consumed. In order to enable continuous operation or at any rate operation for a longer period in a discontinuous manner the gassifying vessel 131 may, as is shown in Fig. 11, be provided with a filling device 132. This filling device 132 comprises a filling funnel 133, a fuel feeding tube 134 and a worm conveyor 135 arranged in the latter. The worm conveyor 135 can be rotated by means of the crank 136 so that fuel is conveyed from the filling funnel 133 into the gassifying vessel 131. The fuel in the helical lands of the conveyor and in the filling funnel 133 constitutes adequate sealing for the gassifying vessel 131. The vessel 131 is furthermore provided with a cross flap 137 of known type, by which the ash entering the gas chamber 140 can be removed without false air being drawn in through said flap 137. The cyclone 141 is also provided with such a cross flap 138 by which the ash and dirt particles separated out in the cyclone 141 can be passesd to the ash container 139. Apart from the filling device 132 of Fig. 11, a worm conveyor may be arranged in the vessel 131 itself or, as indicated by broken lines, a stationary screw, provided the slopes of the screw are sufficiently steep to permit undisturbed flow of the fuel in downward direction. A further alternative resides in that the diameter and the height of the vessel 131 are dimensioned such that the fuel contained therein itself provides sufficient seal so that the top side may remain open.

The gas generator 150 of Fig. 12 comprises a gassifying vessel 151, which has a double-wall structure at the upper end. The inner wal 153 is perforated. Between the perforated inner wall 153 and the outer wall 152 a space is formed with which communicates a suction end 156 of a circulation duct 155. The circulation duct 155 includes a ventilator 157 and a condenser 158. The return duct 163 of the circulation duct 155 opens out at a small distance above the air inlet 170 in the gassifying vessel 151. The blow-out end 164 of the circulation duct 155 is constructed so that it can be opened only sideways. In this case this is achieved by means of a guide plate 165 beneath the open end 164. The circulation duct 155 thus constitutes together with the interior of the gassifying vessel a closed circulation system and serves to remove redundant moisture from the fuel 154. The ventilator 157 blows air or at least gas from the blow-out end 164. This gas flows partly via the fuel 154 and through the perforated inner wall 153 into the space between the outer wall 152 and the inner wall 153. At the suction end 156 of the circulation duct 155 the gas now carrying moisture from the fuel 154 is sucked away. The moist gas flows via the ventilator 157 towards the condenser 158. The condenser 158 comprises an upper tray divided into two parts by a partition 160. The upper tray communicates through cooling elements 161 with the lower tray 166. Owing to the partition 160 the gas flows in the direction of the arrows 162 first downwards through one half of the cooling elements 161 and then upwards through the other half. During its passage through the cooling elements 161 the gas is cooled by the cooling air 167. Cooling of the gas results in condensation of the moisture absorbed in the gas. This condensed moisture is collected in the lower tray 166 and can be drained at a desired instant through the tap 168. The gas thus dried flows through the return duct 163 back into the gassifying vessel and it again absorbs moisture during the next flow through the fuel 154 for separation in the condenser 158.

The part of the gassifying vessel 151 located below the air inlets 170 also has double walls. At the lower end the space between the inner wall 171 and the outer wall communicates with the interior of the gassifying vessel. At the top end the gas outlet duct 176 communicates with the intermediate space. The air inlets 170 are located at a distance from the lower end of the gassifying vessel so that below the hearth to be formed near the air inlets 170 there is a quantity of fuel 174. This fuel operates as a filter for the produced gas and absorbs a large portion of the ash particles formed in the hearth. Since during its flow downwards across the fuel 174 the gas is cooled, part of the tar products is also separated out by condensation. During the upward flow through the intermediate space the gas first cooled is again heated so that the dirt particles carried by the gas are dried. This facilitates the separation of these dirt particles in the cyclone 177. In the space between the inner wall 171 and the outer wall 169 is arranged a guide plate 175, which forms a helical channel in said space. Thus the path to be covered by the gas in the space is prolonged so that the gas can be satisfactorily heated. At the lower end the gassifying vessel is provided with a cover 172, which carries a grate 173 precisely fitting in the interior of the gassifying vessel 151. When the fuel is consumed, the ash can be simply removed and the vessel can be simply cleaned by removing the cover 172.

The gas outlet duct includes a gas cooler 178, which is constructed in a manner similar to that of the condenser 158. The gas first flows downwards through one half of the cooling elements and subsequently through the lower tray upwards through the second half of the cooling elements. The purified and cooled gas 179 is then fed in the manner described earlier to the engine of the aggregate.

As is shown in Fig. 12, the ventilator 181 arranged in a cooling air jacket 180 conveys cooling air 167 first through the condenser 158 and subsequently through the gas cooler 178. Since the temperature of the gas in the circulation duct 155 is appreciably lower than that of the combustion gas from the gassifying vessel, a single flow of cooling air can economically flow through both the condenser 158 and the gas cooler 178.

It should be noted that, since the circulation duct 155 together with the gassifying vessel constitutes a closed system, the gas flow circulating in this circulation duct 155 does not affect the formation of the combustion gas in the gassifying vessel. The blow-out end 164 of the circulation duct 155 blows the gas laterally out in order to prevent part of the circulating air from passing through the hearth.

CLAIMS

1. A stationary aggregate comprising a frame, a combustion engine mounted on said frame and provided with a fuel inlet and a combustion air inlet and a driven device coupled with said engine characterized by a gas generator comprising a gassifying vessel, provided with an air inlet and a gas outlet duct connected with the fuel inlet, and a gas purifying device included in the gas outlet duct, and by a starting ventilator connected with the gas outlet duct parallel to the fuel inlet.

2. An aggregate as claimed in Claim 1, characterized by fuel drying means.

3. An aggregate as claimed in Claim 2, characterized in that the fuel drying means comprise a circulation duct connected at both ends with the gassifying vessel and including a ventilator and a condenser.

4. An aggregate as claimed in Claim 3, characterized in that above the air inlet the gassifying vessel is at least partly double-walled, the inner wall being perforated and in that the suction end of the circulation duct opens out above the space between the two walls, whereas the blow-out end opens out at a short distance above the air inlet centrally in the gassifying vessel.

5. An aggregate as claimed in Claim 4, characterized in that the blow-out end of the circulation duct is only laterally open.

6. An aggregate as claimed in Claim 2, characterized in that the fuel drying means comprise a fuel container provided with a fuel drying chamber communicating with the exhaust tube of the combustion engine.

7. An aggregate as claimed in Claim 2, characterized in that the fuel drying means comprise a fuel drying chamber formed between an inner wall and an outer wall of the gassifying vessel.

8. An aggregate as claimed in anyone of the preceding Claims, characterized by a water feeding device supplying water into the air inlet and comprising a control-member metering the amount of water supplied, said control-member comprising a control-valve governed by the subatmospheric pressure in the engine inlet.

9. An aggregate as claimed in anyone of the preceding Claims, characterized in that at least the gas purifying device comprises flushing connections.

10. An aggregate as claimed in anyone of the preceding Claims, characterized in that the air inlet is arranged at a distance from the lower end in the gassifying vessel, in that the gassifying vessel is double-walled from near the air inlet to the lower end and the space between the two walls communicates at the lower end with the interior of the gassifying vessel and at the top end with the gas outlet duct.

11. An aggregate as claimed in anyone of the preceding Claims, characterized in that the fuel inlet includes a control-valve and the combustion air inlet includes a control-valve and in that the two control-valves are coupled with one another through a transmission maintaining an adjustable opening ratio.

12. An aggregate as claimed in anyone of the preceding Claims, characterized in that the gassifying vessel comprises a cinter remover, which is controllable from the outside of said vessel and which is movable along the air inlet.

13. An aggregate as claimed in anyone of the preceding Claims, characterized in that the air inlet of the gassifying vessel comprises an exchangeable nozzle head of refractory material.

14. An aggregate as claimed in anyone of the preceding Claims, characterized by an automatic fuel supply device connected with the gassifying vessel.

FIG.1

FIG. 2

"2/5"

FIG.3

FIG.4

FIG.5

FIG.6

"4/5"

34

108 107
110
96 109

112

13

95 99

14

18 115

44

FIG.8

51

FIG.7

35

133

132

136 135 134

FIG.11

131

141

140

137 138

139

"5/5"

FIG.10

FIG.9

FIG.12

0054991

Application number

EP 81 20 1310

**European Patent Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| Y | CH - A - 204 190 (GERTSCH)  <br> * page 1; figure * | 1 |
| Y | GB - A - 270 269 (ERDÖL)  <br> * page 1, line 100 to page 2, line 29; figure 1 * | 1 |
| A | DE - A - 2 412 563 (KIENER UND BORST)  <br> * page 1, paragraph 1; page 4, paragraphe 2; page 6, paragraph 3; page 7, paragraph 5 to page 10, paragraph 3; figure 1 * | 1,2,3, 6 |
| A | GB - A- 116 746 (PARKER)  <br> * page 2, lines 6-8; lines 20-43; page 3, lines 27-35; figures 1,2 * | 1,8 |
| A | FR - E - 48 649/FR - A - 810 897 (LEGUES)  <br> * page 1, lines 8-15, line 53 to page 2, line 18; figures 1,2 * | 1,8 |
| A | FR - A- 897 378 (BROWN BOVERI)  <br> * page 3, lines 12-28, lines 80-87; figures 1,5,6 * | 1,11 |

./.

**CLASSIFICATION OF THE APPLICATION (Int. Cl. 3)**

F 02 B 43/08
F 02 G 3/02

**TECHNICAL FIELDS SEARCHED (Int.Cl. 3)**

F 02 G
F 02 B
C 10 J
B 60 K
B 04 C

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| The Hague | 24-03-1982 | KOOIJMAN |

EPO Form 1503.1 06.78

European Patent
Office

**EUROPEAN SEARCH REPORT**

| Category | DOCUMENTS CONSIDERED TO BE RELEVANT | | CLASSIFICATION OF THE APPLICATION (Int. Cl.3) |
|---|---|---|---|
| | Citation of document with indication, where appropriate, of relevant passages | Relevant to claim | |
| A | US - A - 3 841 851 (KAISER) <br><br> * column 4, line 15 to column 5, line 14; column 6, line 57 to column 8, line 10; figures 1,8-10 * <br><br> -- | 1,2, 12,14 | |
| D,A | FR - A - 2 398 888 (FIAT) <br><br> * page 1, lines 18-35; page 2, lines 19-27; page 3, lines 27-39; page 4, lines 19-31; figures 1,2,6 * <br><br> ---------- | 1 | TECHNICAL FIELDS SEARCHED (Int. Cl.3) |

EPO Form 1503.2  06.78